# EUROPÄISCHE PATENTSCHRIFT

(11) **EP 3 525 938 B1**
(45) Veröffentlichungstag und Bekanntmachung des Hinweises auf die Patenterteilung: **29.04.2020**
(21) Anmeldenummer: 17821803.8
(22) Anmeldetag: 01.12.2017
(51) Int. Cl.: B05B 12/00, B05B 12/12, B05B 13/04

(54) **BESCHICHTUNGSEINRICHTUNG ZUR BESCHICHTUNG VON BAUTEILEN**
COATING DEVICE FOR COATING WORKPIECES
DISPOSITIF DE REVÊTEMENT POUR REVETIR DES PIÈCES

(30) Priorität: 14.12.2016 DE 102016014952
(43) Veröffentlichungstag der Anmeldung: 21.08.2019
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE)
(74) Vertreter: v. Bezold & Partner Patentanwälte - PartG mbB
(86) Internationale Anmeldenummer: PCT/EP2017/081102
(87) Internationale Veröffentlichungsnummer: WO 2018/108565

(56) Entgegenhaltungen:
- DE-A1-102012 006 371

## Beschreibung

Die Erfindung betrifft eine Beschichtungseinrichtung zur Beschichtung von Bauteilen mit einem Beschichtungsmittel, insbesondere zur Lackierung von Kraftfahrzeugkarosseriebauteilen.

Zur Serienlackierung von Kraftfahrzeugkarosseriebauteilen werden als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Eine neuere Entwicklungslinie sieht dagegen als Applikationsgerät sogenannte Druckköpfe vor, wie sie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl, der sich nahezu vollständig auf dem zu lackierenden Bauteil niederschlägt, so dass nahezu kein Overspray entsteht.

Bei der Beschichtung einer begrenzten Fläche (z.B. ein Dekor) auf einer Bauteiloberfläche mittels eines solchen Druckkopfs muss der Lackstrahl jedoch zeitlich und räumlich sehr genau gesteuert werden, damit die Grenzen der zu beschichtenden Fläche eingehalten werden, ohne dass es beim Lackieren zu einem Überschreiten oder einem Unterschreiten der Grenze der zu beschichtenden Fläche kommt. Um kostengünstig und wettbewerbsfähig produzieren zu können bzw. um hohe Flächenleistungen zu erzielen, müssen die Applikatoren mit dem Roboter schnell bewegt werden, z.B. mit einer Ziehgeschwindigkeit im Bereich von 0,5m/s bis 0,75m/s. Die Kombination aus exakten Ein- und Ausschaltpositionen der Applikatoren oder deren einzelnen Ventile sowie der hohen Lackiergeschwindigkeit ergibt die Notwendigkeit von sehr kurzen Reaktionszeiten bzw. Steuerungsimpulsen (z.B. 1ms, 500ps, 100µs, 10ps), die üblicherweise mit den Robotersteuerungen nicht möglich sind. Hierzu müssen Druckkopfventile in dem Druckkopf zeitlich sehr genau ein- bzw. ausgeschaltet werden, um den Lackierstrahl entsprechend einzuschalten bzw. auszuschalten. Dies ist jedoch mit den üblichen Robotersteuerungen nicht möglich, da diese Robotersteuerungen mit einer bestimmten Zykluszeit getaktet arbeiten, wobei die Zykluszeit der Robotersteuerung zu lang ist, um die erforderliche zeitliche Genauigkeit bei der Steuerung der Druckkopfventile zu erreichen.

Aus EP 2 196 267 A2 ist eine Beschichtungsanlage bekannt, wobei ein Beschichtungsroboter einen Druckkopf über die zu beschichtenden Bauteile bewegt. Der Beschichtungsroboter wird hierbei von einer Robotersteuerung angesteuert. Zusätzlich zu der Robotersteuerung ist eine separate Steuereinheit vorgesehen, welche eine Dosiereinheit steuert und den gewünschten Lackstrom einstellt. Eine separate Druckkopfsteuerung ist aus dieser Veröffentlichung nicht bekannt.

Ferner ist zum allgemeinen technischen Hintergrund der Erfindung hinzuweisen auf DE 10 2010 004 496 A1 und DE 10 2014 013 158 A1.

Schließlich offenbart DE 10 2012 006 371 A1 eine Beschichtungseinrichtung gemäß dem Oberbegriff des Anspruchs 1. Diese bekannte Beschichtungseinrichtung ist jedoch noch nicht vollständig befriedigend.

Der Erfindung liegt deshalb die Aufgabe zugrunde, dieses Problem zu lösen.

Diese Aufgabe wird durch eine erfindungsgemäße Beschichtungseinrichtung gemäß dem Hauptanspruch gelöst.

Die Erfindung umfasst die allgemeine technische Lehre, die Druckkopfventile in dem Druckkopf nicht durch die Robotersteuerung anzusteuern, die den Beschichtungsroboter steuert. Stattdessen sieht die Erfindung vielmehr eine separate Drucckopfsteuerung vor, welche die Druckkopfventile in dem Drucckopf steuert und hinreichend schnell arbeitet, um die erforderliche zeitliche und räumliche Genauigkeit bei der Steuerung der abgegebenen Lackstrahlen zu erreichen. Eine Kommunikation mit der Robotersteuerung sollte vorhanden sein, um die Druckkopfsteuerung entsprechend zu beauftragen.

Die erfindungsgemäße Beschichtungseinrichtung dient zur Beschichtung von Bauteilen, wie beispielsweise Kraftfahrzeugkarosseriebauteilen. Die Erfindung ist jedoch hinsichtlich des Typs der zu beschichtenden Bauteile nicht auf Kraftfahrzeugkarosseriebauteile beschränkt. Vielmehr kann es sich bei den zu beschichtenden Bauteilen auch um andere Bauteile handeln.

Weiterhin ist zu erwähnen, dass die Beschichtungseinrichtung vorzugsweise zur Lackierung von Bauteilen mit einem Lack ausgelegt ist, d.h. bei dem zu applizierenden Beschichtungsmittel handelt es sich vorzugsweise um einen Lack, wie beispielsweise einen lösemittelbasierten Lack, einen Wasserlack, einen farbgebenden Basislack oder einen Klarlack, um nur einige Beispiele zu nennen. Die Erfindung ist jedoch hinsichtlich des Typs des zu applizierenden Beschichtungsmittels nicht auf Lacke beschränkt, sondern grundsätzlich auch mit anderen Typen von Beschichtungsmitteln realisierbar, wie beispielsweise mit Klebern, Dämmstoffen, Dichtstoffen, Primern, etc., um nur einige Beispiele zu nennen.

Die erfindungsgemäße Beschichtungseinrichtung weist als Applikationsgerät einen Druckkopf mit mindestens einer Düse auf, um einen Beschichtungsmittelstrahl auf das zu beschichtende Bauteil abzugeben, wobei die Beschichtungsmittelabgabe durch die Düse mittels eines Druckkopfventils gesteuert wird.

Der im Rahmen der Erfindung verwendete Begriff eines Drucckopfs ist zunächst allgemein zu verstehen und dient lediglich zur Abgrenzung von herkömmlichen Zerstäubern (z.B. Rotationszerstäuber), die keinen räumlich eng begrenzten Beschichtungsmittelstrahl abgeben, sondern einen Sprühnebel des Beschichtungsmittels. Vorzugsweise handelt es sich bei dem Druckkopf jedoch um einen Druckkopf, wie er beispielsweise in DE 10 2013 002 412 A1, US 9,108,424 B2 und DE 10 2010 019 612 A1 beschrieben ist.

Weiterhin umfasst die erfindungsgemäße Beschichtungseinrichtung einen mehrachsigen Beschichtungsroboter, der den Drucckopf über die Oberfläche des zu beschichtenden Bauteils führt. Der Beschichtungsroboter weist vorzugsweise eine serielle Roboterkinematik mit mindestens sechs oder sieben beweglichen Roboterachsen und einer Roboterhandachse auf, um den Druckkopf hochbeweglich über die Bauteiloberfläche zu führen. Derartige Beschichtungsroboter sind an sich aus dem Stand der Technik bekannt und müssen deshalb nicht näher beschrieben werden.

Darüber hinaus weist die erfindungsgemäße Beschichtungseinrichtung im Einklang mit dem Stand der Technik eine Robotersteuerung auf, die den Beschichtungsroboter ansteuert.

Die erfindungsgemäße Beschichtungseinrichtung zeichnet sich nun gegenüber dem Stand der Technik - wie bereits vorstehend kurz erwähnt wurde - durch eine separate Druckkopfsteuerung aus, die von der Robotersteuerung getrennt ist und das mindestens eine Druckkopfventil ansteuert, wobei die Drucckopfsteuerung hinreichend schnell arbeitet, um die erforderliche zeitliche und räumliche Genauigkeit bei der Steuerung der Beschichtungsmittelabgabe zu erreichen.

Es wurde bereits eingangs kurz erwähnt, dass die Robotersteuerung den Beschichtungsroboter in der Regel mit einer bestimmten ersten Zykluszeit getaktet ansteuert, wobei diese erste Zykluszeit zu lang ist, um bei der Ansteuerung des Druckkopfventils die gewünschte zeitliche und räumliche Genauigkeit der Beschichtungsmittelabgabe zu erreichen. Die erfindungsgemäße Druckkopfsteuerung arbeitet getaktet mit einer bestimmten zweiten Zykluszeit, wobei diese zweite Zykluszeit der Druckkopfsteuerung kürzer ist als die erste Zykluszeit der Robotersteuerung, damit die Druckkopfsteuerung bei der Ansteuerung des Druckkopfventils die erforderliche zeitliche und räumliche Genauigkeit der Steuerung der Beschichtungsmittelabgabe erreichen kann.

Bei einer Verfahrgeschwindigkeit des Druckkopfes ist die Position des Druckkopfes nur quantisiert in Einheiten der Robotersteuerungstaktrate bekannt. Bei einer Verfahrgeschwindigkeit v=750 mm/s und einer Robotersteuerungstaktrate von 4ms beträgt diese Positionsquantelung 3 mm. Für eine genauere Positionierung (< 1mm, < 0.1 mm) des An- bzw. Abschaltpunkts des Beschichtungsmittels auf dem Substrat, z.B. exakt an der Kante des Substrats, reicht dies nicht aus.

Die zweite Zykluszeit der Druckkopfstellung beträgt deshalb vorzugsweise höchstens 100ms, 50ms, 20ms, 10ms, 5ms, 1ms oder sogar höchstens 100µs.

Die Druckkopfsteuerung ist vorzugsweise eingangsseitig mit der Robotersteuerung verbunden und erhält von der Robotersteuerung mit der Taktrate der Robotersteuerung die aktuelle räumliche Position die aktuelle räumliche Position und/oder die aktuelle Geschwindigkeit und/oder die aktuelle räumliche Ausrichtung des Druckkopfs und/oder des Beschichtungsobjekts als Eingangsinformation, damit die Druckkopfsteuerung diese Information bei der Steuerung des Druckkopfventils berücksichtigen kann.

Die Druckkopfsteuerung interpoliert bzw. extrapoliert (z.B. linear, mit Splines, kubisch) diese Positionen auf ihre eigenen Zeitschritte, sodass sie eine höhere Positionsauflösung erhält. Dadurch kann der An- bzw. Abschaltpunkt des Beschichtungsmittelstroms bzw. Beschichtungsmitteltropfens genau gesetzt werden.

Die Druckkopfsteuerung kann beispielsweise auch als unabhängig arbeitendes Modul in die Roboter-Steuerung integriert sein.

Weiterhin ist zu erwähnen, dass die erfindungsgemäße Beschichtungseinrichtung vorzugsweise einen Farbwechsler enthält, der eines von mehreren Beschichtungsmitteln auswählt und das ausgewählte Beschichtungsmittel an den Druckkopf weiterleitet.

Darüber hinaus enthält die erfindungsgemäße Beschichtungseinrichtung vorzugsweise eine Dosierpumpe, die das zu applizierende Beschichtungsmittel dosiert und zu dem Druckkopf fördert.

In dem bevorzugten Ausführungsbeispiel der Erfindung steuert die Druckkopfsteuerung nicht nur das mindestens eine Drucckopfventil des Druckkopfs an, sondern vorzugsweise auch den Farbwechsler und/oder die Dosierpumpe.

Es wurde bereits vorstehend erwähnt, dass die Druckkopfsteuerung den von dem Druckkopf applizierten Beschichtungsmittelstrahl hochdynamisch und zeitlich genau gesteuert einschalten und ausschalten kann, um auf der Bauteiloberfläche Beschichtungsmuster mit einer sehr genauen Ortsauflösung erreichen zu können. Dies ist beispielsweise wichtig, wenn eine zu beschichtende Fläche eine scharfe Kante aufweist, die bei der Beschichtung exakt eingehalten werden muss. Die Drucckopfsteuerung arbeitet deshalb vorzugsweise so schnell und genau, dass der Beschichtungsmittelstrahl auf der Bauteiloberfläche eine genaue Ortsauflösung von weniger als ±2mm, ±1mm, ±0,5mm oder sogar weniger als ±0,1mm erreicht.

Zur Erreichung einer so genauen Beschichtung ist vorzugsweise eine Vermessungseinrichtung vorgesehen, welche die räumliche Position und/oder Ausrichtung des zu beschichtenden Bauteils vermisst und die ermittelte Position und/oder Ausrichtung an die Druckkopfsteuerung übermittelt, damit die Druckkopfsteuerung dies bei der Steuerung der Druckkopfventile berücksichtigen kann. Die Vermessungseinrichtung kann hierbei wahlweise direkt mit der Druckkopfsteuerung oder mittelbar über die Robotersteuerung mit der Druckkopfsteuerung verbunden sein. Entscheidend ist im Rahmen der Erfindung lediglich, dass die ermittelte Position bzw. Ausrichtung des zu beschichtenden Bauteils bei der Steuerung der Druckkopfventile berücksichtigt werden kann.

In einem bevorzugten Ausführungsbeispiel der Erfindung weist die Vermessungseinrichtung eine Kamera auf, die ein Bild des zu beschichtenden Bauteils aufnimmt, wobei dieses Bild von einer Bildauswertungseinheit ausgewertet wird, die daraus die räumliche Position bzw. Ausrichtung des zu beschichtenden Bauteils ermittelt. Im Rahmen der Erfindung besteht auch die Möglichkeit, dass mehrere Kameras an verschiedenen Positionen angeordnet sind, um die Genauigkeit der Positionsbestimmung zu erhöhen.

In dem bevorzugten Ausführungsbeispiel der Erfindung kann die Vermessungseinrichtung die räumliche Position und/oder Ausrichtung des zu beschichtenden Bauteils mit einer sehr hohen Genauigkeit und einer entsprechend geringen Positionstoleranz ermitteln, wobei die Positionstoleranz vorzugsweise kleiner ist als ±2mm, ±1mm, ±0,5mm, ±0,25mm oder sogar kleiner als ±0,1mm.

Bei dem bevorzugten Ausführungsbeispiel der Erfindung weist die Beschichtungseinrichtung neben der Druckkopfsteuerung und der Robotersteuerung eine zusätzliche Dosierungssteuerung auf, um die bereits vorstehend erwähnten Dosiereinrichtung (z.B. Dosierzylinder, Dosierpumpe, etc.), welche das Beschichtungsmittel dosiert und zu dem Druckkopf fördert.

Die Dosierungssteuerung ist vorzugsweise mit der Drucckopfsteuerung verbunden, um die Steuerung der Dosierpumpe mit der Steuerung der Druckkopfventile des Druckkopfs zu synchronisieren. Falls beispielsweise plötzlich zahlreiche Drucckopfventile geöffnet werden, so steigt der Beschichtungsmittelverbrauch plötzlich an, so dass dann auch die Dosierpumpe mit einer höheren Leistung betrieben werden sollte.

Darüber hinaus ist die Dosierungssteuerung vorzugsweise auch mit der Robotersteuerung verbunden, um die Steuerung der Dosierpumpe mit der Steuerung des Beschichtungsroboters zu synchronisieren. Falls die Robotersteuerung den Beschichtungsroboter beispielsweise so ansteuert, dass der Druckkopf mit einer hohen Ziehgeschwindigkeit über die Bauteiloberfläche bewegt wird, so muss in der Regel auch eine große Beschichtungsmenge von der Dosierpumpe gefördert werden, so dass eine Synchronisierung der Robotersteuerung einerseits und der Dosiersteuerung andererseits vorteilhaft ist.

Es wurde bereits mehrfach erwähnt, dass die Erfindung eine hochdynamische und genaue Steuerung der Druckkopfventile ermöglicht, indem eine separate Druckkopfsteuerung vorgesehen ist, die hinreichend schnell arbeitet. Dies macht jedoch nur dann Sinn, wenn die Druckkopfventile selbst hinreichend schnell arbeiten. Die Druckkopfventile haben deshalb bei der Erfindung vorzugsweise eine sehr kurze Umschaltdauer von höchstens 100ms, 50ms, 20ms, 5ms, 1ms oder sogar höchstens 100µs. Eine sehr gute Reproduzierbarkeit bzw. Wiederholgenauigkeit der Schaltzeiten aller Ventile ist noch wichtiger, um diese ggf. einzeln zu korrigieren.

Ferner ist zu erwähnen, dass die erfindungsgemäße Beschichtungseinrichtung eine erste Datenschnittstelle aufweisen kann, um mit einer Produktionsplanung zu kommunizieren, was jedoch an sich aus dem Stand der Technik bekannt ist und deshalb nicht näher beschrieben werden muss.

Darüber hinaus kann die erfindungsgemäße Beschichtungseinrichtung eine zweite Datenschnittstelle aufweisen, um eine Steuerdatei aufzunehmen, wobei die Steuerdatei beispielsweise eine Grafik vorgeben kann, die von der Beschichtungseinrichtung auf die Bauteiloberfläche aufgebracht werden soll. Diese zweite Datenschnittstelle kann beispielsweise mittels eines USB-Stick-Lesers (USB: Universal Serial Bus) oder mittels eines Speicherkarten-Lesers realisiert werden, um nur einige Beispiele zu nennen.

Weiterhin besteht im Rahmen der Erfindung die Möglichkeit, dass eine Lackierstatistik geführt wird. Ferner kann im Rahmen der Erfindung auch eine Lackbedarfsmengenberechnung erfolgen. Darüber hinaus besteht die Möglichkeit einer Kommunikation mit einem grafischen Visualisierungsrechner. Weiterhin besteht im Rahmen der Erfindung die Möglichkeit der Kommunikation mit einer Sicherheitssteuerung. Hierbei kann eine Lackierfreigabe durch eine übergeordnete Steuerung erfolgen, die auch prüft, ob eine Zuluftanlage in Betrieb ist und keine sicherheitsrelevanten Störungen vorliegen. Darüber hinaus kann die Lackierfreigabe auch durch die Druckkopfsteuerung erfolgen, wenn diese feststellt, dass der Farbdruck in Ordnung ist, die Dosierpumpe arbeitet, der Beschichtungsroboter in seiner Ausgangsposition ist, die optische Vermessung bereit ist, das Fahrzeug vermessen wurde und eine Positionskorrektur erfolgt ist.

Ferner ist zu erwähnen, dass der Druckkopf vorzugsweise einen eng begrenzten Beschichtungsmittelstrahl abgibt im Gegensatz zu einem Sprühnebel, wie es bei herkömmlichen Zerstäubern (z.B. Rotationszerstäuber) der Fall ist.

In einer Variante der Erfindung gibt der Druckkopf einen Tröpfchenstrahl ab, der aus zahlreichen Tröpfchen besteht, die in Längsrichtung des Tröpfchenstrahls voneinander getrennt sind, im Gegensatz zu einem in Strahllängsrichtung zusammenhängenden Beschichtungsmittelstrahl.

In einer anderen Variante der Erfindung gibt der Druckkopf dagegen einen in Strahllängsrichtung zusammenhängenden Beschichtungsmittelstrahl ab, im Gegensatz zu einem Tröpfchenstrahl.

Diese beiden Varianten (Tröpfchenstrahl und zusammenhängender Beschichtungsmittelstrahl) können im Rahmen der Erfindung auch kombiniert werden. So kann der Druckkopf beispielsweise abwechselnd einen Tröpfchenstrahl und einen zusammenhängenden Beschichtungsmittelstrahl abgeben. Weiterhin besteht im Rahmen der Erfindung die Möglichkeit, dass ein Teil der Düsen des Druckkopfs einen Tröpfchenstrahl abgibt, während gleichzeitig ein anderer Teil der Düsen desselben Druckkopfs einen in Strahllängsrichtung zusammenhängenden Beschichtungsmittelstrahl abgibt.

Weiterhin ist zu erwähnen, dass der Beschichtungsmitteldruck vorzugsweise mit einer relativ geringen Schwankungsbreite von maximal ±500mbar, ±200mbar, ±100mbar oder sogar ±50mbar kontrolliert wird.

Vorteilhaft an der Verwendung eines Druckkopfs als Applikationsgerät ist der hohe Auftragswirkungsgrad, der vorzugsweise größer ist als 80%, 90%, 95% oder sogar 99%, so dass der Druckkopf im Wesentlichen Overspray-frei arbeitet.

Weiterhin ist zu erwähnen, dass der Druckkopf vorzugsweise eine ausreichend hohe Flächenbeschichtungsleistung aufweist, um Kraftfahrzeugkarosseriebauteile effizient lackieren zu können. Der Druckkopf weist deshalb vorzugsweise eine Flächenbeschichtungsleistung von mindestens 0,5m²/min, 1m²/min, 2m²/min oder sogar 3m²/min auf.

Ferner ist zu erwähnen, dass der Volumenstrom des applizierten Beschichtungsmittels und damit die Austrittsgeschwindigkeit des Beschichtungsmittels vorzugsweise so eingestellt wird, dass das Beschichtungsmittel nach dem Auftreffen auf das Bauteil nicht von dem Bauteil abprallt oder bei einem Lackauftrag nass-in-nass ("wet-on-wet") die untere Lackschicht nicht durchdringt oder zur Seite schiebt bzw. verdrängt.

Die Austrittsgeschwindigkeit des Beschichtungsmittels aus dem Druckkopf kann deshalb beispielsweise im Bereich von 5m/s bis 30m/s liegen, wobei beliebige Zwischenintervalle möglich sind.

Der Applikationsabstand (d.h. der Abstand zwischen Düse und Bauteiloberfläche) liegt dagegen vorzugsweise im Bereich von 4mm bis 200mm.

Darüber hinaus ist zu erwähnen, dass das Druckkopfventil vorzugsweise einen elektrisch ansteuerbaren Aktor aufweist, beispielsweise einen Magnetaktor oder einen Piezoaktor, um das gewünschte schnelle Ansprechen zu ermöglichen.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine stark vereinfachte schematische Darstellung einer erfindungsgemäßen Lackieranlage,
- Figur 2: eine schematische Darstellung zur Erläuterung des der Erfindung zugrundeliegenden Problems und der erfindungsgemäßen Lösung,
- Figur 3: eine schematische Darstellung eines Druckkopfs, der entlang einer programmierten Bewegungsbahn über die Bauteiloberfläche bewegt wird,
- Figur 4: eine schematische Darstellung zur Verdeutlichung des Problems des verzögerten Ansprechens der Druckkopfventile, sowie
- Figur 5: eine schematische Darstellung zur Verdeutlichung der Interpolation der Positionen in der Drucckopfsteuerung aus den Positionen in der Robotersteuerung.

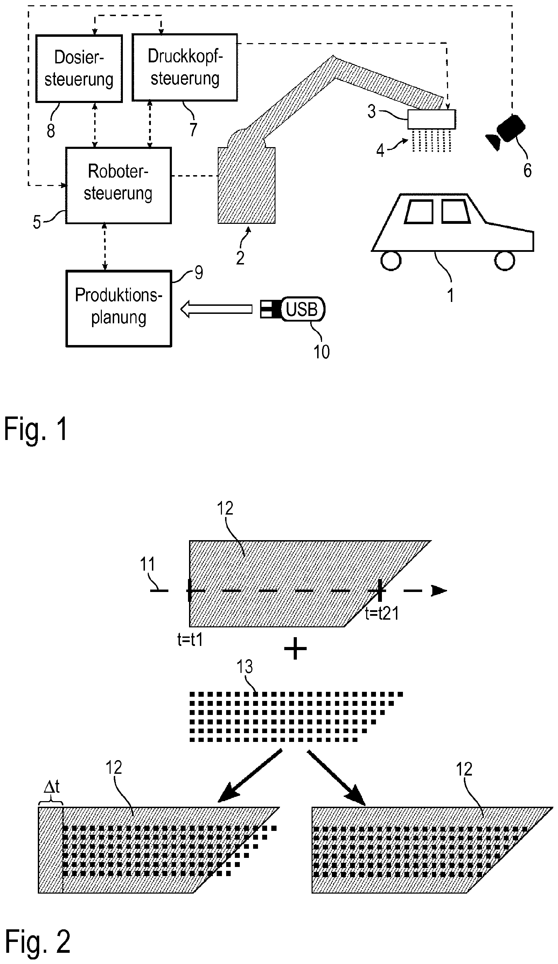

Figur 1 zeigt eine stark vereinfachte schematische Darstellung einer erfindungsgemäßen Lackieranlage zur Lackierung von Kraftfahrzeugkarosseriebauteilen 1 mit einem Lack.

Die Kraftfahrzeugkarosseriebauteile 1 werden hierbei in herkömmlicher Weise von einem Förderer entlang einer Lackierstraße durch die Lackieranlage gefördert, was an sich aus dem Stand der Technik bekannt ist und deshalb zur Vereinfachung nicht dargestellt ist.

Die Lackierung erfolgt hierbei durch einen mehrachsigen Lackierroboter 2 mit einer seriellen Roboterkinematik und mehreren Roboterarmen und einer hochbeweglichen Roboterhandachse, die als Applikationsgerät einen Druckkopf 3 führt. Der Druckkopf 3 gibt dann Beschichtungsmittelstrahlen 4 auf die Oberfläche des Kraftfahrzeugkarosseriebauteils 1 ab, wie schematisch dargestellt ist.

Hierbei ist zu erwähnen, dass der Lackierroboter 2 in einer Lackierkabine angeordnet ist, die typischerweise beiderseits der Lackierstraße mehrere derartige Lackierroboter 2 enthält, wobei zur Vereinfachung nur ein einziger Lackierroboter 2 dargestellt ist.

Der Lackierroboter 2 kann in herkömmlicher Weise von einer Robotersteuerung 5 gesteuert werden, wobei die Robotersteuerung 5 mit einer bestimmten Zykluszeit getaktet arbeitet und deshalb entsprechend der Zykluszeit nur eine Positionierung mit einer beschränkten Ortsauflösung ermöglicht. Die auf diese Weise erreichbare Ortsauflösung ist jedoch nicht hinreichend genau, um mit dem Druckkopf 3 örtlich genau auf der Bauteiloberfläche zu lackieren.

Die erfindungsgemäße Beschichtungseinrichtung weist deshalb zusätzlich eine Kamera 6 auf, die ein Bild des Kraftfahrzeugkarosseriebauteils 1 und des Lackierroboters 2 aufnimmt, um eine genaue Relativpositionierung des Lackierroboters 2 mit dem Druckkopf 3 relativ zu dem Kraftfahrzeugkarosseriebauteil 1 zu ermöglichen.

Das von der Kamera 6 aufgenommene Bild wird dann von einer Bildauswertungseinheit ausgewertet, wobei die Bildauswertungseinheit hier zur Vereinfachung nicht dargestellt ist.

Weiterhin ist zu erwähnen, dass im Rahmen der Erfindung die Möglichkeit besteht, dass mehrere derartige Kameras 6 vorgesehen sind, die den Lackierroboter 2 und das Kraftfahrzeugkarosseriebauteil 1 aus verschiedenen Perspektiven aufnehmen und dadurch eine höhere Genauigkeit bei der Positionsbestimmung ermöglichen.

Es wurde bereits vorstehend erwähnt, dass die Robotersteuerung 5 eine relativ große Zykluszeit aufweist, die nicht die erforderliche örtliche Genauigkeit ermöglicht, um den Drucckopf 3 hochgenau anzusteuern. Die erfindungsgemäße Beschichtungseinrichtung weist deshalb vorzugsweise eine separate Druckkopfsteuerung 7 auf, welche die in dem Druckkopf 3 befindlichen und zur Vereinfachung nicht dargestellten Drucckopfventile zeitlich hochgenau und hochdynamisch ansteuert.

Die Druckkopfsteuerung 7 ist eingangsseitig mit der Robotersteuerung 5 verbunden und erhält von der Robotersteuerung 5 die aktuelle Position und Ausrichtung des Kraftfahrzeugkarosseriebauteils 1 relativ zu dem Druckkopf 3, um diese Eingangsinformation bei der Steuerung der Druckkopfventile in dem Druckkopf 3 berücksichtigen zu können.

Weiterhin ist zu erwähnen, dass die Beschichtungseinrichtung unter anderem einen Farbwechsler und eine Dosierpumpe aufweist, die zur Vereinfachung nicht dargestellt sind. Der Farbwechsler und die Dosierpumpe werden von einer zusätzlichen Dosierungssteuerung 8 angesteuert, die mit der Drucckopfsteuerung 7 und der Robotersteuerung 5 verbunden ist.

Darüber hinaus ist eine Datenschnittstelle vorgesehen zu einer Produktionsplanung 9.

Die Produktionsplanung 9 weist wiederum eine Datenschnittstelle auf, beispielsweise in Form eines USB-Stick-Lesers, so dass mittels eines USB-Sticks 10 eine Steuerdatei eingelesen werden kann, die eine Grafik definiert (z.B. ein Dekor), das auf die Bauteiloberfläche des Kraftfahrzeugkarosseriebauteils aufgebracht werden soll.

Hierbei besteht die Möglichkeit, dass die Steuerdatei vom Endkunden über die Autohäuser direkt ins Werk übertragen wird. In der Produktionssoftware wird dann die Grafik der Seriennummer der Karosse zugeordnet. Die Datenübertragung zur Robotersteuerung erfolgt dann über eine Schnittstelle der Produktionssoftware und die Identifikation üblicherweise über Lesestellen und Datenträger an der Karosse. Auf dem Datenträger kann nicht nur die Seriennummer gespeichert sein, sondern auch sonstige Daten ggf. die Grafikdaten.

Allgemein ist zu erwähnen, dass die Robotersteuerung 5, die Druckkopfsteuerung 7 und die Dosierungssteuerung 8 vorzugsweise als separate Hardware-Komponenten ausgebildet und voneinander getrennt sind.

Es besteht jedoch im Rahmen der Erfindung grundsätzlich auch die Möglichkeit, dass die Robotersteuerung 5, die Drucckopfsteuerung 7 und die Dosierungssteuerung 8 lediglich als separate Software-Komponenten in einer ansonsten einheitlichen Steuerungseinheit realisiert sind.

Im Folgenden wird nun die schematische Darstellung in Figur 2 erläutert. So zeigt Figur 2 im oberen Bereich eine programmierte Bewegungsbahn 11, wobei der Druckkopf 3 entlang der programmierten Bewegungsbahn 11 über die Oberfläche des Kraftfahrzeugkarosseriebauteils 1 bewegt wird.

Darüber hinaus zeigt Figur 2 im oberen Bereich eine begrenzte zu beschichtende Fläche 12, die von dem Druckkopf 3 entlang der programmierten Bewegungsbahn 11 überstrichen wird. Zum Zeitpunkt t=t1 passiert der Druckkopf 3 dann die in der Zeichnung links liegende Grenze der zu beschichtenden Fläche 12, so dass zu diesem Zeitpunkt auch die Beschichtung beginnen sollte. Zum Zeitpunkt t=t2 passiert der Druckkopf 3 dann die gegenüberliegende Grenze der zu beschichtenden Fläche 12, so dass der Druckkopf 3 genau zu diesem Zeitpunkt die Beschichtung wieder einstellen sollte.

Figur 2 zeigt im mittleren Bereich die tatsächlichen Öffnungszeiten 13 der Druckkopfventile des Druckkopfs 3. Hierbei wird zur Vereinfachung davon ausgegangen, dass der Drucckopf 3 sechs Düsen in einer Reihe aufweist. Tatsächlich weist der Druckkopf 3 jedoch in der Praxis eine größere Anzahl von Düsen und eine größere Anzahl von Düsenreihen auf, was jedoch für das Prinzip der Erfindung unbeachtlich ist.

Bei einer zeitlich exakten Ansteuerung der Druckkopfventile des Druckkopfs 3 liegen die tatsächlichen Öffnungszeiten 13 der Druckkopfventile des Druckkopfs 3 räumlich exakt innerhalb der zu beschichtenden Fläche 12, wie in Figur 2 rechts unten dargestellt ist.

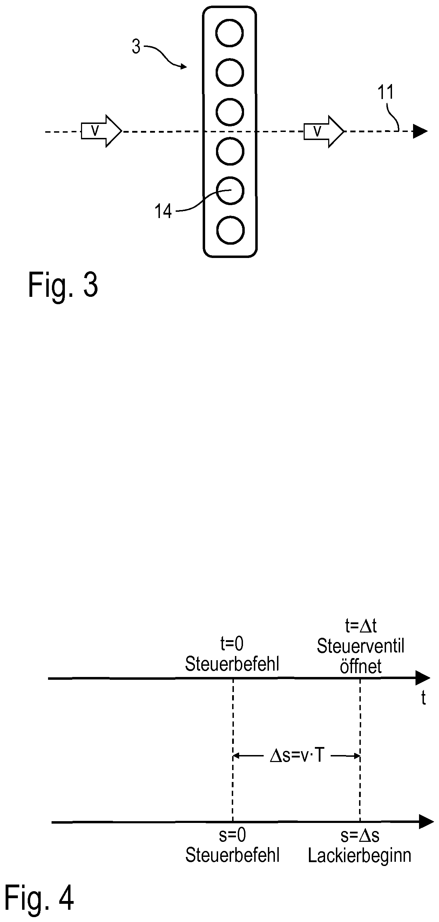

Tatsächlich würden die Druckkopfventile in dem Druckkopf 3 jedoch bei einer Ansteuerung durch die relativ träge Robotersteuerung 5 mit einem zeitlichen Versatz Δt öffnen, wenn der Druckkopf 3 entlang der programmierten Bewegungsbahn 11 die Grenze der zu beschichtenden Fläche 12 passiert. Dies bedeutet, dass die zu beschichtende Fläche 12 erst mit einem entsprechenden räumlichen Versatz Δs=v·t lackiert wird, wie in Figur 4 dargestellt ist. Der räumliche Versatz Δs und damit die erreichbare Ortsauflösung bei der Lackierung hängt hierbei von der Ziehgeschwindigkeit v des Druckkopfs 3 entlang der programmierten Bewegungsbahn 11 und dem zeitlichen Versatz Δt ab. Der Versatz kann beispielsweise durch eine Vorhaltezeit kompensiert werden. Ein Problem stellt jedoch die Taktung der Steuerung dar, die einen Wiederholungsfehler ("Jitter") erzeugt. Es ist deshalb wichtig, dass die Ansteuerung der Druckkopfventile in dem Druckkopf 3 zeitlich hochdynamisch und zeitlich sehr genau erfolgt.

Figur 3 zeigt eine vereinfachte schematische Darstellung des Druckkopfs 3 mit sechs Düsen 14, die in einer einzigen Düsenreihe angeordnet sind. In der Praxis weist der Druckkopf 3 jedoch typischerweise eine größere Anzahl von Düsen 14 pro Düsenreihe und auch eine größere Anzahl von Düsenreihen auf, was jedoch für die Erfindung nicht beachtlich ist.

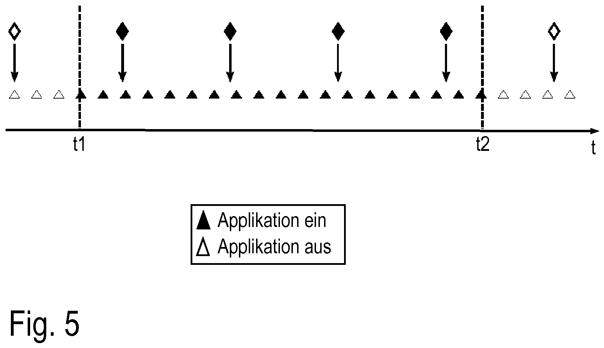

Figur 5 zeigt eine schematische Darstellung zur Verdeutlichung der Interpolation der Positionen in der Druckkopfsteuerung aus den Positionen in der Robotersteuerung.

So zeigt die Zeichnung im oberen Bereich die in der Robotersteuerung hinterlegten Positionen entlang einer Zeitachse, wobei die Positionen jeweils als Zeitmarke ◆ bzw. ◊ dargestellt sind. Darunter zeigt die Zeichnung die in der Drucckopfsteuerung hinterlegten Positionen entlang der Zeitachse.

Die ausgefüllten Zeitmarken ◆ verdeutlichen hierbei jeweils einen Zeitpunkt, in dem Beschichtungsmittel appliziert wird, während die nicht ausgefüllten Zeitmarken ◊ jeweils einen Zeitpunkt symbolisieren, in dem kein Beschichtungsmittel appliziert wird.

Aus der Zeichnung ist ersichtlich, dass die zeitliche Auflösung und damit auch die Ortsauflösung der Positionen in der Robotersteuerung wesentlich gröber und damit ungenauer ist als in der Druckkopfsteuerung.

Die Druckkopfsteuerung ermöglicht diese feinere Ortsauflösung der Positionen dadurch, dass die Druckkopfsteuerung aus den relativ groben Positionen der Robotersteuerung feinere Positionen interpoliert.

Der Druckkopf wird hierbei entlang einer vorgegebenen Bewegungsbahn über die Bauteiloberfläche bewegt, wobei zum Zeitpunkt t=t1 die Beschichtung beginnen und zum Zeitpunkt t=t2 wieder enden soll. Aus der Zeichnung ist ersichtlich, dass die Beschichtung sehr genau an den gewünschten Zeitpunkten t=t1 bzw. t=t2 begonnen bzw. beendet wird, was durch die vorstehend erwähnte Interpolation ermöglicht wird.

### Bezugszeichenliste:

- 1: Kraftfahrzeugkarosseriebauteil
- 2: Lackierroboter
- 3: Druckkopf
- 4: Beschichtungsmittelstrahlen
- 5: Robotersteuerung
- 6: Kamera
- 7: Druckkopfsteuerung
- 8: Dosierungssteuerung
- 9: Produktionsplanung
- 10: USB-Stick
- 11: Programmierte Bewegungsbahn
- 12: zu beschichtende Fläche
- 13: Öffnungszeiten der Druckkopfventile
- 14: Düsen des Druckkopfs
- Δt: räumlicher Versatz zwischen gewünschtem Beschichtungsbeginn und tatsächlichem Beschichtungsbeginn
- Δt: Zeitversatz zwischen gewünschtem Beschichtungsbeginn und tatsächlichem Beschichtungsbeginn
- v: Ziehgeschwindigkeit des Druckkopfs entlang der programmierten Bewegungsbahn
- ◆: Zeitmarke mit Applikation
- ◊: Zeitmarke ohne Applikation

## Patentansprüche

1. Beschichtungseinrichtung zur Beschichtung von Bauteilen mit einem Beschichtungsmittel, insbesondere zur Lackierung von Kraftfahrzeugkarosseriebauteilen (1), mit
a) einem Druckkopf (3) mit
a1) mindestens einer Düse zur Abgabe eines Beschichtungsmittelstrahls auf das zu beschichtende Bauteil (1), und
a2) mindestens einem Druckkopfventil zur Steuerung der Beschichtungsmittelabgabe durch die Düse,
b) einem mehrachsigen Beschichtungsroboter (2), der den Druckkopf (3) über die Oberfläche des zu beschichtenden Bauteils (1) führt, sowie
c) einer Robotersteuerung (5), die den Beschichtungsroboter (2) ansteuert, wobei die Robotersteuerung (5) den Beschichtungsroboter (2) mit einer bestimmten ersten Zykluszeit getaktet ansteuert,
d) einer Druckkopfsteuerung (7), die das Druckkopfventil ansteuert, wobei die Druckkopfsteuerung (7) das Drucckopfventil des Druckkopfs (3) mit einer bestimmten zweiten Zykluszeit getaktet ansteuert,
**dadurch gekennzeichnet,**
e) **dass** die zweite Zykluszeit der Druckkopfsteuerung (7) kürzer ist als die erste Zykluszeit der Robotersteuerung (5).

2. Beschichtungseinrichtung nach Anspruch 1, **dadurch gekennzeichnet, dass** die zweite Zykluszeit der Druckkopfsteuerung (7) höchstens 100ms, 50ms, 20ms, 10ms, 5ms, 1ms, 500µs, 100µs oder höchstens 10µs beträgt.

3. Beschichtungseinrichtung nach einem der vorhergehenden Ansprüche, **dadurch gekennzeichnet, dass** die Druckkopfsteuerung (7) eingangsseitig mit der Robotersteuerung (5) verbunden ist und von der Robotersteuerung (5) die aktuelle räumliche Position und/oder die aktuelle Geschwindigkeit und/oder die aktuelle räumliche Ausrichtung des Druckkopfs (3) als Eingangsinformation erhält.

4. Beschichtungseinrichtung nach einem der vorhergehenden Ansprüche, **dadurch gekennzeichnet, dass** die Druckkopfsteuerung (7) zusätzlich zu dem Druckkopfventil des Druckkopfs (3) folgendes ansteuert:
a) einen Farbwechsler, der eines von mehreren Beschichtungsmitteln auswählt und das ausgewählte Beschichtungsmittel an den Druckkopf (3) weiterleitet,
b) eine Dosiereinrichtung, insbesondere eine Dosierpumpe, die das zu applizierende Beschichtungsmittel dosiert.

5. Beschichtungseinrichtung nach einem der vorhergehenden Ansprüche, **dadurch gekennzeichnet, dass** die Druckkopfsteuerung (7) den von dem Druckkopf (3) applizierten Beschichtungsmittelstrahl hochdynamisch und zeitlich genau gesteuert einschalten und ausschalten kann und zwar mit einer Ortsauflösung auf der Oberfläche des zu beschichtenden Bauteils (1) von weniger als ±2mm, ±1mm, ±0,5mm oder sogar weniger als ±0,1mm.

6. Beschichtungseinrichtung nach einem der vorhergehenden Ansprüche, **gekennzeichnet durch** eine Vermessungseinrichtung (6) zur Vermessung der räumlichen Position des zu beschichtenden Bauteils (1), wobei die Vermessungseinrichtung (6) ausgangsseitig mit der Druckkopfsteuerung (7) verbunden ist und die räumliche Position des zu beschichtenden Bauteils (1) an die Druckkopfsteuerung (7) übermittelt.

7. Beschichtungseinrichtung nach Anspruch 6, **dadurch gekennzeichnet, dass** die Vermessungseinrichtung folgendes aufweist:
a) mindestens einen Sensor, insbesondere eine Kamera oder eine Lichtschranke, zur Positionsbestimmung, und
b) eine Auswertungseinheit, die das Sensorsignal, insbesondere das von der Kamera (6) aufgenommene Bild, auswertet und daraus die räumliche Position des zu beschichtenden Bauteils (1) ermittelt.

8. Beschichtungseinrichtung nach Anspruch 6 oder 7, **dadurch gekennzeichnet, dass** die Vermessungseinrichtung (6) die räumliche Position des zu beschichtenden Bauteils (1) mit einer Positionstoleranz von weniger als ±2mm, ±1mm, ±0,5mm, ±0,25mm oder sogar weniger als ±0,1mm ermittelt.

9. Beschichtungseinrichtung nach einem der vorhergehenden Ansprüche, **dadurch gekennzeichnet**
a) **dass** die Beschichtungseinrichtung eine Dosierungssteuerung (8) aufweist zur Steuerung einer Dosiereinrichtung, die das Beschichtungsmittel dosiert und zu dem Druckkopf (3) fördert, und
b) **dass** die Dosierungssteuerung (8) mit der Druckkopfsteuerung (7) verbunden ist, um die Steuerung der Dosiereinrichtung mit der Steuerung des mindestens einen Druckkopfventils des Druckkopfs (3) zu synchronisieren, und
c) **dass** die Dosierungssteuerung (8) mit der Robotersteuerung (5) verbunden ist, um die Steuerung der Dosiereinrichtung mit der Steuerung des Beschichtungsroboters (2) zu synchronisieren.

10. Beschichtungseinrichtung nach einem der vorhergehenden Ansprüche, **dadurch gekennzeichnet, dass** das mindestens eine Druckkopfventil des Druckkopfs (3) eine kurze Umschaltdauer von höchstens 100ms, 50ms, 20ms, 5ms, 1ms oder höchstens 100µs aufweist.

11. Beschichtungseinrichtung nach einem der vorhergehenden Ansprüche, **gekennzeichnet durch** eine erste Datenschnittstelle zur Kommunikation mit einer Produktionsplanung (9).

12. Beschichtungseinrichtung nach einem der vorhergehenden Ansprüche, **gekennzeichnet durch** eine zweite Datenschnittstelle (10) zur Aufnahme einer Steuerdatei, insbesondere einer Grafikdatei, zur Beschichtung des Bauteils (1) mit einer Grafik, wobei die Grafik **durch** die Steuerdatei vorgegeben wird.

13. Beschichtungseinrichtung nach Anspruch 12, **dadurch gekennzeichnet, dass** die zweite Datenschnittstelle folgendes aufweist:
a) einen USB-Stick-Leser, und/oder
b) einen Speicherkarten-Leser, und/oder
c) eine Schnittstelle zur Produktionssteuerung.

14. Beschichtungseinrichtung nach einem der vorhergehenden Ansprüche, **dadurch gekennzeichnet,**
a) **dass** der Druckkopf (3) einen eng begrenzten Beschichtungsmittelstrahl abgibt im Gegensatz zu einem Sprühnebel, und/oder
b) **dass** der Druckkopf (3) einen Tröpfchenstrahl abgibt im Gegensatz zu einem in Strahllängsrichtung zusammen hängenden Beschichtungsmittelstrahl, oder
c) **dass** der Druckkopf (3) einen in Strahllängsrichtung zusammen hängenden Beschichtungsmittelstrahl abgibt im Gegensatz zu einem Tröpfchenstrahl, und/oder
d) **dass** der Beschichtungsmitteldruck mit einer maximalen Schwankungsbreite von ±500mbar, ±200mbar, ±100mbar, ±50mbar kontrolliert wird, und/oder
e) **dass** der Druckkopf (3) einen Auftragswirkungsgrad von mindestens 80%, 90%, 95% oder 99% aufweist, so dass im Wesentlichen das gesamte applizierte Beschichtungsmittel vollständig auf dem Bauteil (1) abgelagert wird, ohne dass Overspray entsteht, und/oder
f) **dass** der Druckkopf (3) eine Flächenbeschichtungsleistung von mindestens 0,5 m²/min, 1m²/min, 2m²/min oder mindestens 3m²/min aufweist, und/oder
g) **dass** der Volumenstrom des applizierten Beschichtungsmittels und/oder die Austrittsgeschwindigkeit des Beschichtungsmittels so eingestellt wird, dass das Beschichtungsmittel nach dem Auftreffen auf das Bauteil (1) nicht von dem Bauteil (1) abprallt, und/oder
h) **dass** die Austrittsgeschwindigkeit des Beschichtungsmittels aus dem Druckkopf (3) mindestens 5 m/s, 7 m/s oder 10 m/s beträgt, und/oder
i) **dass** die Austrittsgeschwindigkeit des Beschichtungsmittels aus dem Druckkopf (3) höchstens 30 m/s, 20 m/s oder 10 m/s beträgt, und/oder
j) **dass** der Applikationsabstand mindestens 4mm, 10 mm oder 40 mm und/oder beträgt, und/oder
k) **dass** der Applikationsabstand höchstens 200mm oder 100 mm beträgt, und/oder
l) **dass** das Beschichtungsmittel ein Lack ist, insbesondere ein Basislack, ein Klarlack, ein Effektlack, ein Mica-Lack oder ein Metallic-Lack, und/oder
m) **dass** das Beschichtungsmittel ein Wasserlack oder ein Lösemittellack ist, und/oder
n) **dass** das Druckkopfventil einen elektrisch ansteuerbaren Aktor aufweist, um Tropfen des Beschichtungsmittels aus dem Druckkopf (3) auszustoßen, insbesondere einen Magnetaktor oder einen Piezoaktor, und/oder
o) **dass** der Beschichtungsroboter (2) eine serielle Roboterkinematik aufweist, und/oder
p) **dass** der Beschichtungsroboter (2) mindestens sechs oder sieben bewegliche Roboterachsen aufweist, und/oder
q) **dass** der Beschichtungsroboter (2) eine Roboterhandachse mit mehreren beweglichen Achsen aufweist.

## Claims

1. Coating device for coating components with a coating agent, in particular for painting motor vehicle body components (1), with
a) a printhead (3) with
a1) at least one nozzle for delivering a coating agent jet to the component (1) to be coated, and
a2) at least one printhead valve for controlling the release of coating agent through the nozzle,
b) a multi-axis coating robot (2) which guides the printhead (3) over the surface of the component (1) to be coated, as well as
c) a robot control (5) which controls the coating robot (2), wherein the robot control (5) controls the coating robot (2) with a specific first cycle time in a clocked manner,
d) a printhead control (7) that controls the printhead valve, wherein the printhead control (7) controls the printhead valve of the printhead (3) in a clocked manner with a specific second cycle time,
**characterized in that**
e) the second cycle time of the printhead control (7) is shorter than the first cycle time of the robot control (5) .

2. Coating device according to claim 1, **characterized in that** the second cycle time of the printhead control (7) is at most 100 ms, 50 ms, 20 ms, 10 ms, 5 ms, 1 ms, 500 µs, 100 µs or at most 10 µs.

3. Coating device according to one of the preceding claims,
**characterized in that** the printhead control (7) is connected on the input side to the robot control (5) and receives from the robot control (5) the current spatial position and/or the current speed and/or the current spatial orientation of the printhead (3) as input information.

4. Coating device according to one of the preceding claims,
**characterized in that** the printhead control (7) controls the following in addition to the printhead valve of the printhead (3) :
a) a color changer which selects one of a plurality of coating means and forwards the selected coating means to the printhead (3),
b) a metering device, in particular a metering pump, which meters the coating agent to be applied.

5. Coating device according to one of the preceding claims,
**characterized in that** the printhead control (7) can switch on and switch off the coating agent jet applied by the printhead (3) in a highly dynamic and precisely time-controlled manner with a spatial resolution on the surface of the component (1) to be coated of less than ±2 mm, ±1 mm, ±0.5 mm or even less than ±0.1 mm.

6. Coating device according to one of the preceding claims,
**characterized by** a measuring device (6) for measuring the spatial position of the component (1) to be coated, the measuring device (6) being connected on the output side to the printhead control (7) and transmitting the spatial position of the component (1) to be coated to the printhead control (7) .

7. Coating device according to claim 6, **characterised in that** the measuring device comprises the following:
a) at least one sensor, in particular a camera or a light barrier, for position determination, and
b) an evaluation unit which evaluates the sensor signal, in particular the image taken by the camera (6), and determines therefrom the spatial position of the component (1) to be coated.

8. Coating device according to claim 6 or 7, **characterized in that** the measuring device (6) determines the spatial position of the component (1) to be coated with a position tolerance of less than ±2 mm, ±1 mm, ±0.5 mm, ±0.25 mm or even less than ±0.1 mm.

9. Coating device according to one of the preceding claims,
**characterised in that**
a) the coating device has a metering control (8) for controlling a metering device which meters the coating agent and conveys it to the printhead (3), and
b) the metering control (8) is connected to the printhead control (5) in order to synchronize the control of the metering device with the control of the at least one printhead valve of the printhead (3), and
c) the metering control (8) is connected to the robot control (5) in order to synchronize the control of the metering device with the control of the coating robot (2).

10. Coating device according to one of the preceding claims,
**characterized in that** the at least one printhead valve of the printhead (3) has a short switching time of at most 100 ms, 50 ms, 20 ms, 5 ms, 1 ms or at most 100 µs.

11. Coating device according to one of the preceding claims,
**characterized by** a first data interface for communication with a production planning (9).

12. Coating device according to one of the preceding claims,
**characterized by** a second data interface (10) for receiving a control file, in particular a graphics file, for coating the component (1) with a graphic, the graphic being predetermined by the control file.

13. Coating device according to claim 12, **characterized in that** the second data interface has the following:
a) a USB stick reader, and/or
b) a memory card reader; and/or
c) an interface for production control.

14. Coating device in accordance with one of the preceding claims, **characterised in that**
a) the printhead (3) emits a narrowly limited jet of coating medium in contrast to a spray, and/or
b) the printhead (3) emits a droplet jet in contrast to a coating medium jet which is suspended together in the longitudinal direction of the jet, or
c) the printhead (3) emits a coating agent jet which is continuous in the longitudinal direction of the jet, in contrast to a droplet jet, and/or
d) the coating agent pressure is controlled with a maximum variation of ±500 mbar, ±200 mbar, ±100 mbar, ±50 mbar; and/or
e) the printhead (3) has an application efficiency of at least 80%, 90%, 95% or 99% so that substantially all of the applied coating agent is completely deposited on the component (1) without overspray, and/or
f) the printhead (3) has a surface coating performance of at least 0.5 m²/min, 1 m²/min, 2 m²/min or at least 3 m²/min, and/or
g) the volume flow of the applied coating agent and/or the exit velocity of the coating agent is set in such a way that the coating agent does not bounce off the component (1) after it hits the component (1), and/or
h) the exit velocity of the coating agent from the printhead (3) is at least 5 m/s, 7 m/s or 10 m/s, and/or
i) the exit velocity of the coating agent from the printhead (3) is not more than 30 m/s, 20 m/s or 10 m/s; and/or
j) the application distance is at least 4 mm, 10 mm or 40 mm and/or; and/or
k) the application distance is not more than 200 mm or 100 mm; and/or
l) the coating agent is a paint, in particular a base coat, a clear coat, an effect paint, a mica paint or a metallic paint, and/or
m) the coating is a water-based or solvent-based paint; and/or
n) the printhead valve has an electrically controllable actuator in order to eject drops of the coating agent from the printhead (3), in particular a magnetic actuator or a piezo actuator, and/or
o) the coating robot (2) has a serial robot kinematics, and/or
p) the coating robot (2) has at least six or seven movable robot axes, and/or
q) the coating robot (2) has a robot hand axis with a plurality of movable axes.

## Revendications

1. Dispositif de revêtement pour le revêtement de composants avec un produit de revêtement, plus particulièrement pour la peinture de composants de carrosserie de véhicule (1), avec
a) une tête d'impression (3) avec
a1) au moins une buse pour l'émission d'un jet de produit de revêtement sur le composant à revêtir (1) et
a2) au moins une soupape de tête d'impression pour la commande de l'émission de produit de revêtement par la buse,
b) un robot de revêtement multiaxial (2) qui guide la tête d'impression (3) au-dessus de la surface du composant à revêtir (1), ainsi que
c) une commande de robot (5) qui contrôle le robot de revêtement (2), dans laquelle la commande de robot (5) contrôle le robot de revêtement (2) de manière cadencée avec un premier temps de cycle déterminé,
d) une commande de tête d'impression (7), qui contrôle la soupape de tête d'impression, dans laquelle la commande de tête d'impression (7) contrôle la soupape de tête d'impression de la tête d'impression (3) de manière cadencée avec un deuxième temps de cycle déterminé,
**caractérisé en ce que**
e) le deuxième temps de cycle de la commande de tête d'impression (7) est plus court que le premier temps de cycle de la commande de robot (5).

2. Dispositif de revêtement selon la revendication 1, **caractérisé en ce que** le deuxième temps de cycle de la commande de tête d'impression (7) est au maximum de 100 ms, 50 ms, 20 ms, 10 ms, 5 ms, 1 ms, 500 µs, 100 µs ou au maximum de 10 µs.

3. Dispositif de revêtement selon l'une des revendications précédentes, **caractérisé en ce que** la commande de tête d'impression (7) est reliée, du côté de l'entrée, avec la commande de robot (5) et reçoit de la commande de robot (5), en tant qu'information d'entrée, la position spatiale actuelle et/ou la vitesse actuelle et/ou l'orientation spatiale actuelle de la tête d'impression (3).

4. Dispositif de revêtement selon l'une des revendications précédentes, **caractérisé en ce que** la commande de tête d'impression (7) contrôle, en plus de la soupape de tête d'impression de la tête d'impression (3), ce qui suit :
a) un changeur de couleur qui sélectionne un parmi plusieurs produits de revêtement et transmet le produit de revêtement sélectionné à la tête d'impression (3),
b) un dispositif de dosage, plus particulièrement une pompe de dosage, qui dose le produit de revêtement à appliquer.

5. Dispositif de revêtement selon l'une des revendications précédentes, **caractérisé en ce que** la commande de tête d'impression (7) permet de mettre en marche et d'arrêter le jet de produit de revêtement appliqué par la tête d'impression (3) de manière hautement dynamique et contrôlée de manière précise dans le temps, à savoir avec une résolution spatiale sur la surface du composant à revêtir (1) inférieure à ±2 mm, ±1 mm, ±0,5 mm voire inférieure à ±0,1 mm.

6. Dispositif de revêtement selon l'une des revendications précédentes, **caractérisé par** un dispositif de mesure (6) pour la mesure de la position spatiale du composant à revêtir (1), dans lequel le dispositif de mesure (6) est relié, du côté de la sortie, avec la commande de tête d'impression (7) et transmet la position spatiale du composant à revêtir (1) à la commande de tête d'impression (7).

7. Dispositif de revêtement selon la revendication 6, **caractérisé en ce que** le dispositif de mesure comprend ce qui suit :
a) au moins un capteur, plus particulièrement une caméra ou une barrière photo-électrique pour la détermination de la position et
b) une unité d'analyse qui analyse le signal du capteur, plus particulièrement l'image prise par la caméra (6), et qui en déduit la position spatiale du composant à revêtir (1).

8. Dispositif de revêtement selon la revendication 6 ou 7, **caractérisé en ce que** le dispositif de mesure (6) détermine la position spatiale du composant à revêtir (1) avec une tolérance de position inférieure à ±2 mm, ±1 mm, ±0,5 mm, ±0,25 mm voire inférieure à ±0,1 mm.

9. Dispositif de revêtement selon l'une des revendications précédentes, **caractérisé en ce que**
a) le dispositif de revêtement comprend une commande de dosage (8) pour le contrôle d'un dispositif de dosage qui dose le produit de revêtement et le transporte vers la tête d'impression (3) et
b) la commande de dosage (8) est reliée avec la commande de tête d'impression (7) afin de synchroniser la commande du dispositif de dosage avec la commande de l'au moins une soupape de tête d'impression de la tête d'impression (3) et
c) la commande de dosage (8) est reliée avec la commande de robot (5) afin de synchroniser la commande du dispositif de dosage avec la commande du robot de revêtement (2).

10. Dispositif de revêtement selon l'une des revendications précédentes, **caractérisé en ce que** l'au moins une soupape de tête d'impression de la tête d'impression (3) présente une durée de commutation courte de maximum 100 ms, 50 ms, 20 ms, 5 ms, ou 1 ms ou de maximum 100 µs.

11. Dispositif de revêtement selon l'une des revendications précédentes, **caractérisé par** une première interface de données pour la communication avec une planification de production (9).

12. Dispositif de revêtement selon l'une des revendications précédentes, **caractérisé par** une deuxième interface de données (10) pour la prise en charge d'un fichier de commande, plus particulièrement d'un fichier graphique, pour le revêtement du composant (1) avec un graphisme, le graphisme étant prédéterminé par le fichier de commande.

13. Dispositif de revêtement selon la revendication 12, **caractérisé en ce que** la deuxième interface de données comprend ce qui suit :
a) un lecteur de clé USB et/ou
b) un lecteur de cartes mémoire et/ou
c) une interface pour la commande de production.

14. Dispositif de revêtement selon l'une des revendications précédentes, **caractérisé en ce que**
a) la tête d'impression (3) émet un jet de produit de revêtement étroitement limité au lieu d'un brouillard de pulvérisation et/ou
b) la tête d'impression (3) émet un jet de gouttelettes au lieu d'un jet de produit de revêtement cohérent dans la direction longitudinale du jet ou
c) la tête d'impression (3) émet un jet de produit de revêtement cohérent dans la direction longitudinale du jet au lieu d'un jet de gouttelettes et/ou
d) la pression du produit de revêtement est contrôlé avec une plage de variation de ±500 mbar, ±200 mbar, ±100 mbar, ±50 mbar et/ou
e) la tête d'impression (3) présente un rendement d'application d'au moins 80 %, 90 %, 95 % ou 99 %, de façon à ce que globalement l'ensemble du produit de revêtement soit entièrement déposé sur le composant (1) sans générer de pulvérisation en excès et/ou
f) la tête d'impression (3) présente une performance de revêtement de surface d'au moins 0,2 m²/min, 1 m²/min, 2 m²/min ou d'au moins 3 m²/min et/ou
g) le débit volumique du produit de revêtement appliqué et/ou la vitesse de sortie du produit de revêtement est réglée de façon à ce que le produit de revêtement ne rebondisse pas sur le composant (1) à son arrivée sur le composant (1) et/ou
h) la vitesse de sortie du produit de revêtement hors de la tête d'impression (3) est d'au moins 5 m/s, 7 m/s ou 10 m/s et/ou
i) la vitesse de sortie du produit de revêtement hors de la tête d'impression (3) est au maximum de 30 m/s, 20 m/s ou 10 m/s et/ou
j) la distance d'application est d'au moins 4 mm, 10 mm ou 40 mm et/ou
k) la distance d'application est au maximum de 200 mm ou de 100 mm et/ou
l) le produit de revêtement est une peinture, plus particulièrement une peinture de base, un vernis, une peinture à effet, une peinture Mica, ou une peinture métallique et/ou
m) le produit de revêtement est une peinture à l'eau ou une peinture à solvant et/ou
n) la soupape de tête d'impression comprend un actionneur contrôlable électriquement, afin d'éjecter des gouttes de produit de revêtement hors de la tête d'impression (3), plus particulièrement un actionneur magnétique ou un actionneur piézo-électrique et/ou
o) le robot de revêtement (2) comprend une cinématique de robot en série et/ou
p) le robot de revêtement (2) comprend au moins six ou sept axes de robot mobiles et/ou
q) le robot de revêtement (2) comprend un axe de main de robot avec plusieurs axes mobiles.
